Europäisches Patentamt

European Patent Office

Office européen des brevets

(11) Publication number: **0 457 448 A1**

(12) **EUROPEAN PATENT APPLICATION**

(21) Application number: **91303703.2**

(22) Date of filing: **24.04.91**

(51) Int. Cl.⁵: **H04B 7/08**

(30) Priority: **17.05.90 GB 9011120**

(43) Date of publication of application:
**21.11.91 Bulletin 91/47**

(84) Designated Contracting States:
**DE FR IT**

(71) Applicant: **ORBITEL MOBILE COMMUNICATIONS LIMITED Western Road**
Bracknell, Berkshire(GB)

(72) Inventor: **Amir-Alikhani, Hamid**
**24 Webb Close, Chineham**
**Basingstoke, Hampshire RG24 0XU(GB)**

(74) Representative: **Foster, David Martyn et al**
**MATHISEN MACARA & CO. The Coach House 6-8 Swakeleys Road**
**Ickenham Uxbridge UB10 8BZ(GB)**

(54) **Receiver systems.**

(57) A receiver system for a mobile telephone system comprises two or more antennae (A1,A2) spaced a distance apart from each other greater than the wavelength of incident radiation, preferably at least about the order of ten times the wavelength of the incident radiation. Each antenna (A1 or A2) is coupled to a respective receiver channel, each receiver channel comprising an RF means (2 or 4) for processing the received signals, equaliser means ($6_1$ to $6_8$, or $8_1$ to $8_8$) for equalising and decoding the signals from the RF subsystem (2 or 4), and correlation means for determining the impulse energy of a signal sequence of the received signal. The receiver includes means for comparing the determined impulse energy from the separate receiver channels and for selecting the receiver channel having the higher impulse energy.

Fig.3.

This invention relates to receiver systems. In particular the invention relates to receiver systems for mobile telephone systems.

With the impending adoption of the GSM (Groupe Speciale Mobile) system for a Pan-European Mobile Telephone System [see for example Electronics and Communication Engineering Journal Jan/Feb. 1989 vol. 1 no. 1 pp. 7 to 13, "Pan-European cellular radio", D.M. Balston], a number of difficult technical problems have to be overcome for satisfactory implementation of the system.

In mobile telephone systems such as GSM, or PCN (Personal Communications Network), data to be transmitted is modulated on to a UHF band (300MHz-3GHz) carrier utilising digital modulation techniques, e.g. Gaussian minimum shift keying. In GSM, frequency channels are provided at a spacing of 200KHz and data is transmitted on each channel at a total rate of 270.833 Kbits/s.

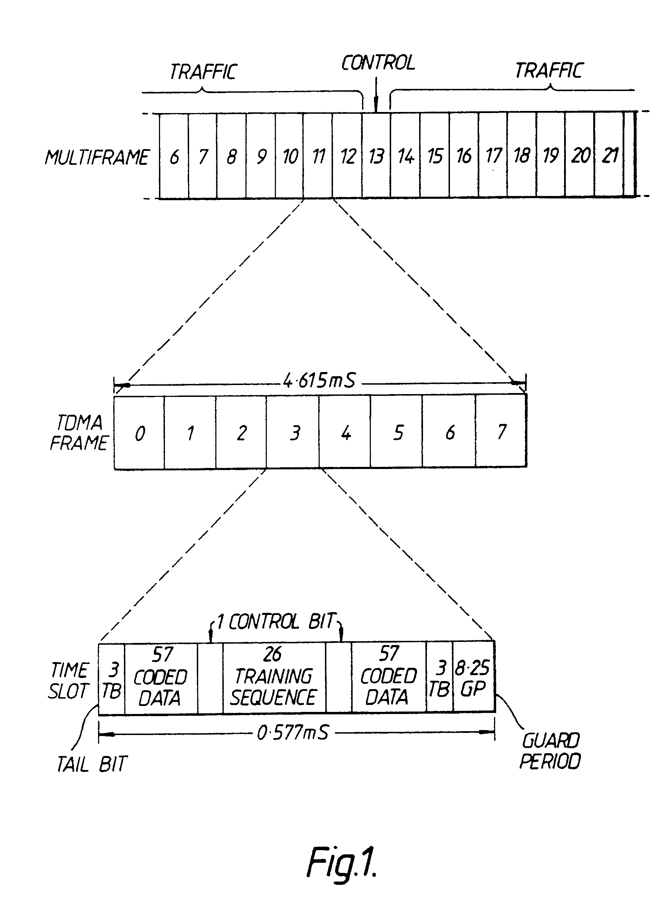

Referring to Figure 1, this shows the basic format of one frequency channel for mobile telephone systems transmissions as comprising a series of frames (Time Domain Multiple Access Frames), each frame comprising eight multiplexed time slots from different mobile stations. Each frame is 4.615 ms in length and each time slot 0.577 ms in length. The structure of a time slot as shown, comprises two sections of data separated by control bits, a training sequence, tail bits etc. Data is transmitted from each mobile station within a time slot in compressed format at a rate of 13 kbits$^{-1}$.

Given the very tight technical constraints of mobile telephone systems, interference and data loss and corruption can easily occur.

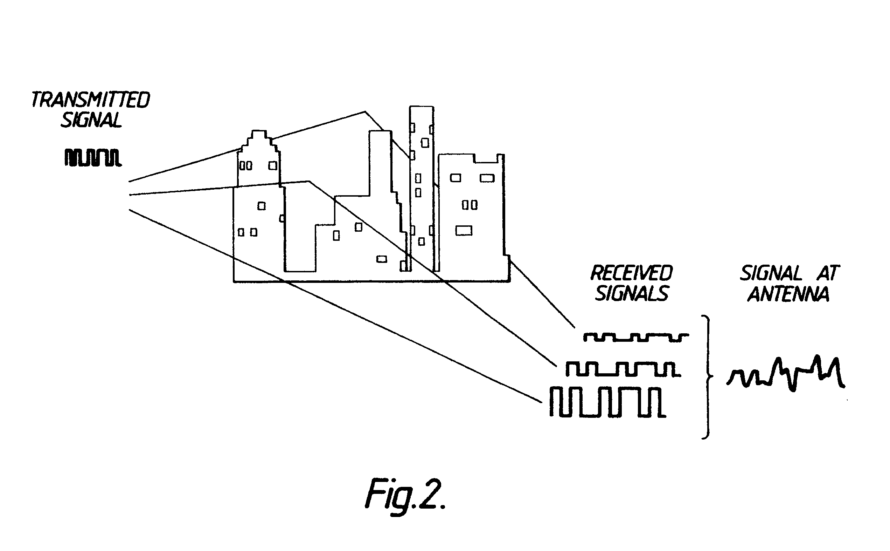

A major problem is that of multipath, since the transmissions reflect from buildings, hills, high-sided vehicles etc. Many different reflections can reach the same position of a mobile or base station, however, and even when there is a direct path it is not unknown for strong reflections to be received as well. The radio paths taken by the reflections are longer than the direct path, and at the bit rates chosen for mobile telephone systems the difference in path length can be equivalent to several bit periods. Figure 2 demonstrates this effect, and it can be seen that the combined signal received at the mobile's antenna can be severely corrupted.

To date existing radio systems have substantially avoided this multipath effect by choosing bit rates which are long compared with the expected multipath delays. In mobile telephone systems, equalisation is employed to recover the wanted signal despite severe multipath corruption.

Equalisation works by making an estimate of the impulse response of the transmission medium, and then constructing an inverse filter through which the received signal is passed. There are several methods for estimating the transfer function of the transmission path and several variations of algorithm associated with each, but whatever the method they all rely on receiving a known sequence of data. This is the training sequence which is transmitted in the middle of each time slot. The receiver detects this sequence, and, knowing what bit pattern it represents, is able to estimate the transfer function most likely to have produced the signal received. The calculation of the coefficients of the filter required to compensate for the response is then relatively straightforward.

The multipath effects can change very rapidly in practice. The wavelength at 900 MHz is only 30cm, and thus a change in the differential path length of only 15cm between two signals received at an antenna can change their interference from constructive to destructive. The mobile telephone system specifications are designed to accommodate vehicles moving at up to 250km/h, and thus the mobile could have moved up to 32cm in the 4.6ms between successive traffic channel time slots. Add to this the problems of reflections from other moving vehicles and it is clear that each time slot has to be treated independently. The equalisation technique commonly employed is based upon the Viterbi algorithm.

One particular problem which arises from multipath is that of fading, which is caused by destructive interference between two signals taking different paths to the receiver.

As mentioned above, a mobile may have moved a distance in the 4.6ms between successive channel time slots of up to 32cm, which is about the same as the wavelength of 900 MHz radiation. Thus interference may have changed from constructive to destructive within the space of adjacent channel time slots.

To overcome this problem, it is proposed in accordance with the invention to provide a receiver system for a mobile telephone system comprising two or more antennae spaced a sufficient distance apart in order that fading effects appearing at one antenna are not present or are manifested differently at another antenna, and a receiver, each antenna being coupled to a respective receiver channel of the receiver, each receiver channel comprising an RF means for processing the received signals, equaliser means for equalising the signals from the RF means, and means for generating information which provides a measure of the quality of the received signals, the receiver including means for comparing all or a portion of said information from the respective receiver channels, and for selecting the receiver channel which provides the more accurate data.

In a more specific aspect, the invention provides a receiver system for a mobile telephone system in which the means for generating information comprises correlation means for determining the impulse energy of a signal sequence of the received signal, the receiver including means for comparing the determined impulse energy from the separate receiver channels and for selecting the receiver channel having the higher impulse energy.

The impulse energy is preferably measured by an autocorrelation technique. One technique which may be used is to employ a matched filter whose impulse response is a time-reversed version of the "mid-amble" or training sequence in the time slot. The training sequence is a 26 bit code formed as an m-sequence (maximal length pseudo-random binary sequence), which has well-defined autocorrelation properties with a large central peak, as will be described in more detail below. Thus by autocorrelating the training sequence of the time slot, and as preferred determining the height of the peak of the correlation, information is provided relating to the impairment of the channel between mobile and base station. Thus in a worst case situation where the whole of the received signal is due to multiple reflections, there will be little or no autocorrelation. However where there is a direct signal path, the correlation peak will be high.

Any convenient form of matched filter could be employed, for example a surface acoustic wave (SAW) filter; alternatively and as preferred the matched filter may be implemented digitally in integrated circuit form together with other processing elements such as the equaliser section.

Although it is preferred to employ the training sequence to measure impulse energy, it would in principle be possible to determine impulse energy by autocorrelating the whole of the time slot with a decoded version of the time slot.

It will be understood that in accordance with the invention, information relating to the quality of the received signal, i.e. forms of metric, other than impulse energy may be employed. An advantage of measuring impulse energy, however, is that the time delay in the measurement is minimal; the determination of impulse energy will be available shortly after the end of the training sequence. In using other metrics such as a cost metric derived from the equalisation process, there will be a substantial delay incurred since the time slot data has to be demodulated.

It may be desirable in certain situations to use a combination of metrics or to select one or another metric to gain a better determination of the quality of the received signals. Reference is made to our copending U.K. Patent Application No. 9011119 which describes the use of accumulated cost metrics and branch metrics as a basis for selection of the better receiver channel.

One embodiment of the invention will now be described, by way of example only, with reference to the accompanying drawings in which:-

Figure 1 is a diagram showing the basic format of one frequency channel for a mobile telephone system transmission;

Figure 2 is a schematic view of multipath effects;

Figure 3 is a block diagram of the embodiment of the receiver system;

Figure 4 is a schematic diagram of an equaliser section of the receiver of Figure 3; and

Figure 5 is a schematic view of the method of determining impulse energy.

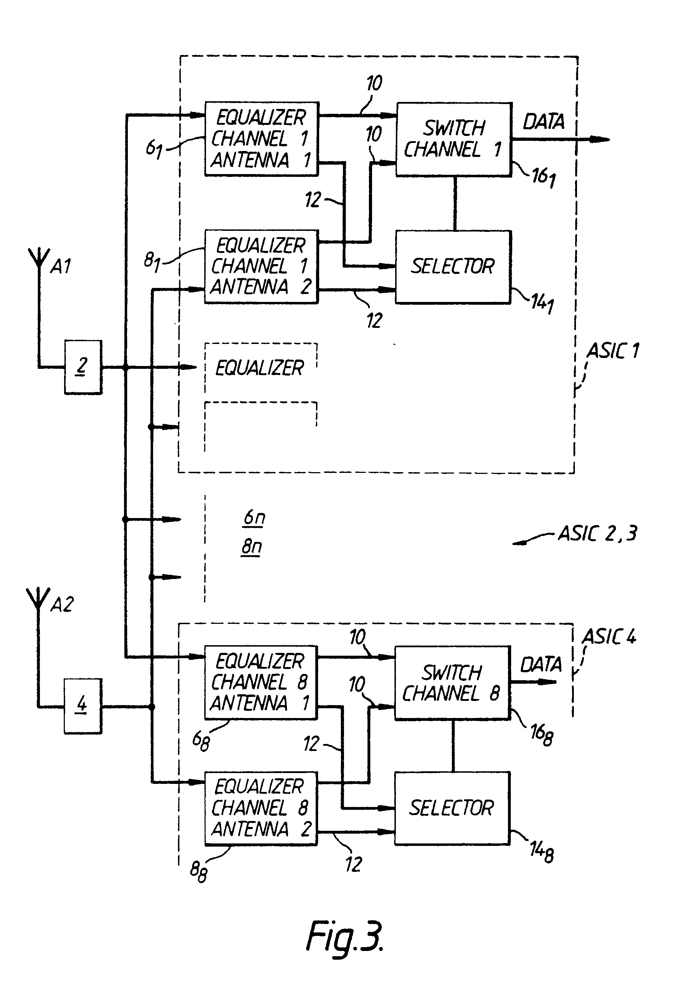

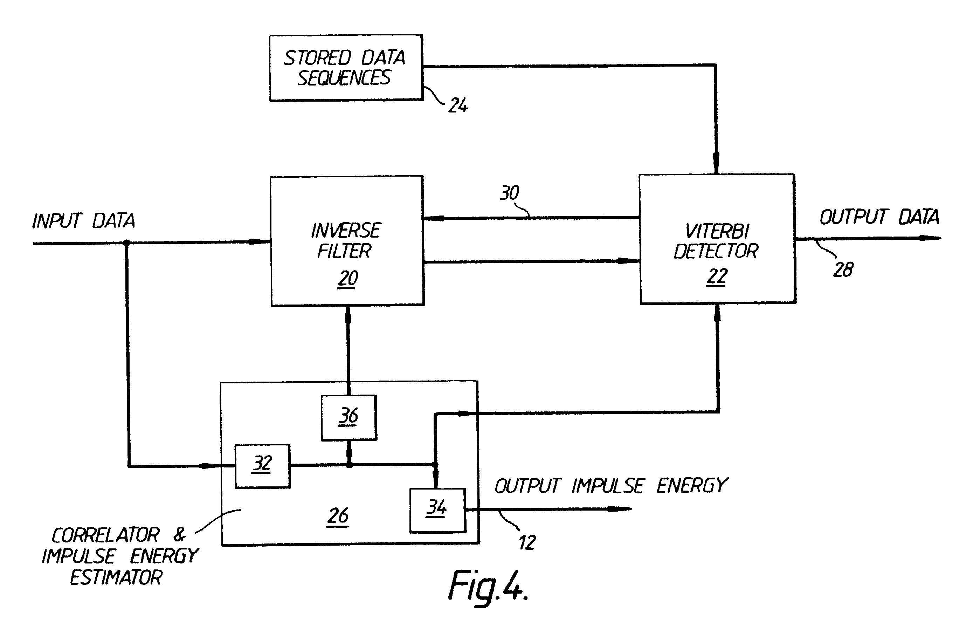

Referring to the embodiment shown in Figures 3 and 4, there are shown two antennae A1 and A2, each comprising a conventional vertical omnidirectional antenna, the two antennae being spaced a distance of between 5 and 10 metres apart. Antenna A1 is coupled to an RF subsystem 2 and antenna A2 is coupled to an RF subsystem 4. These RF subsystems are provided for processing the input RF signal, in particular for setting a suitable gain control level, for deriving a base band signal from the RF signal and for digitising the base band signal. RF subsystem 2 is connected to a first set of equaliser sections $6_1$ to $6_8$ and RF subsystem 4 is coupled to a set of eight identical equaliser channels $8_1$ to $8_8$. Thus each antenna has a respective receiver channel comprising eight identical equaliser sections, each equaliser section being adapted to process a single time slot of a traffic frame in order to decode the data within that channel of the frame. Each equaliser has a data output 10 and a further output 12 which represents an estimate of the impulse energy of the signal sequence constituting the respective time slot. The pulse energy outputs on lines 12 are applied to selectors $14_1$ to $14_8$, one selector being provided for each pair of equaliser sections $6_n$ and $8_n$. Selector $14_n$ is operative to select the impulse energy measurement having the greater value and to operate an associated switch $16_n$ to pass the data from the equaliser section having the greater impulse energy, since this data will have a greater likelihood of being an accurate representation of the transmitted signal. The data from switch 16n is passed to a data decoding section (not shown)

Referring to Figure 4, there is shown an equaliser section in more detail as comprising an inverse filter section 20, a Viterbi detector section 22, a store 24 storing signal sequences which are employed as being likely candidates for the correct signal sequence, and a correlator and impulse energy estimator 26. Detector section 22 operates in accordance with a Viterbi algorithm to determine from the current input signal from filter 20 and the previous determined signal sequences, the most likely form of the current data bit which is output on output line 28. Detector 22 also provides inverse filter 20 with information on line 30 to determine the filter coefficients to enable the filter to accurately compensate for the channel impairment between the transmitter and receiver caused by multipath and other effects.

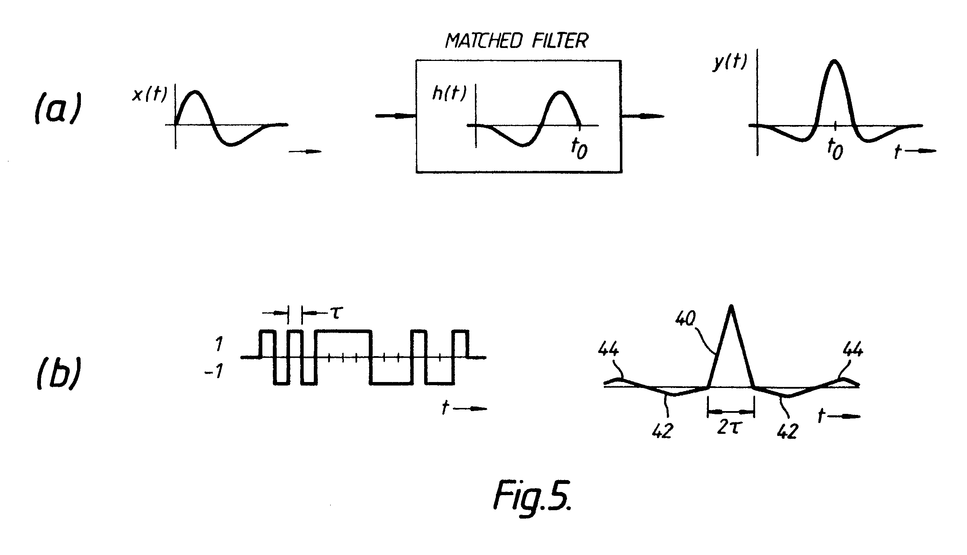

Correlator 26 acts upon the input data to perform a correlation function. The correlator includes a matched filter 32 which acts as illustrated in Figure 5a and contains the time-reversed form of the training sequence in the midamble of the time slot, a part of which is illustrated in Figure 5b. By performing a summation or integration of the stored form multiplied with the input data over the time period of the midamble, the autocorrelation function is obtained as indicated in Figure 5b. Since the midamble is in the form of a m-sequence, a highly resolved central peak 40 is obtained in all but the worst cases, and correlator 26 includes a level detecting unit 34 to measure the height of the peak to provide an output on line 12 representing the height of the peak, i.e. the impulse energy of the sequence.

As can be seen from Figure 5b, the correlation function consists not only of the central peak 40 but also subsidiary peaks or side lobes 42,44. Thus these side lobes contain information about the energy distribution of the input signal. The resultant correlation function is subject to a unit 36 to determine the filter coefficients of the filter 20. It will thus be seen the filter coefficients of filter 20 are determined both from information provided by Viterbi detector 22 and correlator 26.

Correlator 26 also provides an output signal to Viterbi detector 26 to enable the Viterbi algorithm to function to correctly demodulate the data and set up inverse filter 20, in a manner which is known to the person skilled in the art.

In a practical embodiment, four separate equaliser sections are formed on one ASIC (application specific integrated circuit), a total of four ASICs thus being required for this part of the receiver.

It may therefore be seen there has been shown and described a mobile telephone systems receiver for a base station where antenna space diversity is provided to increase the probability of receiving a usable radio signal, the selection of signal path to be used being based on generated metrics. In the past where spaced antenna have been connected to entirely separate receivers the decision as to the better signal path has been based on signal strength, signal to noise ratio, or data error rate. The data error rate is generally measured by reference to the decoding errors of a coding system.

Signal strength selection suffers from the possibility of high levels of interference from adjacent channels corrupting the demodulated signal. Signal to noise ratio is difficult to determine for an approximately random data signal, it being difficult to separate signal from noise. Data error rate requires all signal paths to be fully decoded to determine the best path, which involves considerable time delays.

In the present system a signal path equaliser is used to overcome the effects of multipath delays which exceed the data bit rate. The equaliser correlates with a predetermined synchronisation message within the data.

The described embodiment illustrates a method of deciding which equaliser signal output (one per antenna/receiver path) to be used for subsequent operations. The equaliser output may be used directly as demodulated data or may require further decoding.

Each equaliser correlates a predetermined synchronisation message and produces a measure of the accuracy of the correlation. For example in the Viterbi equaliser described this is the peak in impulse energy.

This measure of accuracy is available before subsequent data has been processed by the equaliser, and a separate function compares the measure produced by each equaliser and determines the best, to choose which equaliser output should subsequently be used.

The delay produced in the data path is limited to the time to transfer the impulse energy magnitude to the selector function and make the decision. Once the choice has been made, no subsequent delay is introduced in the chosen data path.

## Claims

1.   A receiver system for a mobile telephone system characterised in that it comprises two or more antennae (A1,A2) spaced a sufficient distance apart in order that fading effects appearing at one antenna (A1 or A2) are not present or are manifested differently at another antenna (A2 or A1), and a receiver, each antenna (A1,A2) being coupled to a respective receiver channel of the receiver, each receiver channel comprising an RF means (2,4) for processing the received signals, equaliser means (6,8) for equalising the signals from the RF means (2,4), and means for generating information which provides a measure of the quality of the received signals, the receiver including means for comparing all or a portion of said information from the respective receiver channels, and for selecting the receiver channel which provides the more accurate data.

2. A receiver system as claimed in claim 1 in which the means for generating information comprises correlation means (26) for determining the impulse energy of a signal sequence of the received signal, the receiver including means (14) for comparing the determined impulse energy from the separate receiver channels and for selecting the receiver channel having the higher impulse energy.

3. A receiver system as claimed in claim 2 wherein the correlation means (26) is operative to convolve a predetermined signal sequence of known format in order to determine an autocorrelation function, the peak of which provides a measure of the impulse energy.

4. A receiver system as claimed in claim 3 wherein the mobile telephone system operates in accordance with the GSM system, and said predetermined signal sequence comprises an m-sequence forming the midamble of a time slot of a traffic channel.

5. A receiver system as claimed in claim 3 or 4 wherein said measure of impulse energy is applied as a signal to said equaliser means (6,8) to enable the equaliser means (6,8) to perform an equalising function.

6. A receiver system as claimed in claim 5 wherein said equaliser means (6,8) operates in accordance with a Viterbi algorithm.

7. A receiver system as claimed in any of claims 2 to 6 wherein the equaliser means (6,8) provides an inverse filter means (20) to compensate for the effects of multipath, and wherein said correlation means (26) provides signals for determining the coefficients of the inverse filter means (20).

8. A receiver system as claimed in claim 7 wherein the correlation means (26) includes de-convolution means for estimating the filter coefficients within the determined energy within the received signal sequence.

9. A receiver system as claimed in claim 3 wherein the correlation means (26) includes means for determining the height of the correlation peak, and the receiver includes selector means (14) coupled to the correlation means (26) for selecting the higher peak, the selector means being coupled to control data path switch means for selecting the data path associated with the higher correlation peak.

10. A receiver system as claimed in claim 2 incorporated in a mobile telephone system base station receiver, wherein a separate receiver channel coupled to a respective antenna (A1 or A2) is associated with each time slot of a traffic channel.

11. A receiver system as claimed in any one of the preceding claims in which the antennae (A1,A2) are spaced a distance apart from each other greater than the wavelength of the incident radiation.

12. A receiver system according to claim 11 in which the spacing is at least about the order of ten times the wavelength of the incident radiation.

Fig.1.

TRANSMITTED
SIGNAL

RECEIVED
SIGNALS

SIGNAL AT
ANTENNA

*Fig.2.*

EP 0 457 448 A1

Fig.3.

Fig.4.

*(a)*

x(t)

MATCHED FILTER

h(t)

t₀

y(t)

t₀    t →

*(b)*

τ

1
-1

t →

40

44          44

42    2τ    42    t →

**Fig.5.**

EP 0 457 448 A1

European Patent
Office

**EUROPEAN SEARCH REPORT**

Application number

| DOCUMENTS CONSIDERED TO BE RELEVANT | | | EP 91303703.2 |
|---|---|---|---|
| Category | Citation of document with indication, where appropriate, of relevant passages | Relevant to claim. | CLASSIFICATION OF THE APPLICATION (Int Cl⁵) |
| D,A | ELECTRONICS AND COMMUNICATION ENGINEERING-JOURNAL, vol. 1, no. 1, January/February 1989 United Kingdom D.M. BALSTON "Pan European cellular radio" pages 7-13 * Page 11, left column, line 3 - right column, line 7; page 12, medium column, lines 21-43 * | 1 | H 04 B 7/08 |
| A | EP - A2 - 0 095 165 (NEC) * Fig. 3; page 5, line 23 - page 7, line 6 * | 1 | |
| A | US - A - 4 733 402 (MONSEN) * Fig. 2; column 4, lines 22-62 * | 1 | |
| | | | TECHNICAL FIELDS SEARCHED (Int Cl⁵) |
| A | EP - A2 - 0 279 080 (MITSUBISHI DENKI KABUSHIKI) * Fig. 3,4; column 8; claim 1 * | 1 | H 04 B H 04 L |

The present search report has been drawn up for all claims

| Place of search | Date of completion of the search | Examiner |
|---|---|---|
| VIENNA | 16-07-1991 | DRÖSCHER |